# EUROPÄISCHE PATENTSCHRIFT

(11) **EP 3 339 114 B1**
(45) Veröffentlichungstag und Bekanntmachung des Hinweises auf die Patenterteilung: **25.09.2019**
(21) Anmeldenummer: 17208032.7
(22) Anmeldetag: 18.12.2017
(51) Int. Cl.: B60S 1/40, B60S 1/38

(54) **WISCHERVORRICHTUNG UND VERFAHREN ZUR MONTAGE EINER WISCHERVORRICHTUNG**
WIPER DEVICE AND METHOD FOR MOUNTING THE SAME
DISPOSITIF D'ESSUIE-GLACE ET PROCÉDÉ DE MONTAGE D'UN DISPOSITIF D'ESSUIE-GLACE

(30) Priorität: 22.12.2016 DE 102016225959
(43) Veröffentlichungstag der Anmeldung: 27.06.2018
(73) Patentinhaber: Robert Bosch GmbH, 70442 Stuttgart (DE)
(72) Erfinder: Appeltans, Ine, 3570 Alken (BE); Depondt, Helmut, 3370 Boutersem (BE)

(56) Entgegenhaltungen:
- WO-A1-2016/000778
- FR-A1- 2 890 925
- US-A1- 2014 259 504
- US-A1- 2015 274 133

## Beschreibung

### Stand der Technik

Aus dem Stand der Technik ist eine Wischervorrichtung bekannt, mit einem Wischarmadapter und mit einem Wischblattadapter, der einen Grundkörper, eine Zwischeneinheit, eine Führungseinheit und eine Arretierungseinheit aufweist.

US 2014 /0259504 A1 offenbart die Wischvorrichtung des Oberbegriffs von Anspruch 1 und das Verfahren des Oberbegriffs von Anspruch 11.

### Offenbarung der Erfindung

Die Erfindung geht aus von einer Wischervorrichtung, insbesondere einer Scheibenwischervorrichtung, vorteilhaft einer Fahrzeugscheibenwischervorrichtung, mit einem Wischarmadapter und mit einem Wischblattadapter, der eine Zwischeneinheit, welche zu einer lösbaren Verbindung mit dem Wischarmadapter vorgesehen ist, eine Führungseinheit, welche zur Führung des Wischarmadapters bei einer Montage in eine Längsführungsrichtung vorgesehen ist, und eine Arretierungseinheit aufweist, welche in einem montierten Zustand eine Bewegung des Wischarmadapters relativ zu dem Wischblattadapter, insbesondere zumindest der Zwischeneinheit, in zumindest eine Richtung, vorteilhaft eine Längsrichtung, einschränkt.

Es wird vorgeschlagen, dass die Arretierungseinheit zumindest ein Rastelement aufweist, welches in dem montierten Zustand und insbesondere zur Einschränkung der Bewegung des Wischarmadapters relativ zu dem Wischblattadapter, an einer Querseite des Wischarmadapters anliegt. Besonders vorteilhaft liegt das Rastelement dabei an einer Außenseite des Wischarmadapters an. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Erfindungsgemäß wird vorgeschlagen, dass der Wischblattadapter eine weitere Führungseinheit aufweist, welche zur Führung des Wischarmadapters, bevorzugt der Anschlageinheit, bei der Montage in zumindest einer zu der Längsführungsrichtung verschiedenen weiteren Führungsrichtung vorgesehen ist. Die weitere Führungsrichtung kann dabei vorteilhaft einer Vertikalrichtung und/oder einer Radialrichtung entsprechen. Die weitere Führungseinheit ist vorzugsweise an der Zwischeneinheit angeordnet und vorteilhaft befestigt. Bevorzugt kann die weitere Führungseinheit einstückig mit der Zwischeneinheit ausgebildet sein. Hierdurch kann eine Montage und/oder eine Demontage weiter vereinfacht werden. Die weitere Führungseinheit ist dazu vorgesehen, den Wischarmadapter zu einer Montage und/oder bei einer Montage relativ zu dem Wischblattadapter in einer Rotationsbewegung zu führen.

Ferner soll unter einer "Wischervorrichtung" insbesondere zumindest ein Teil, insbesondere eine Unterbaugruppe, eines Wischers, insbesondere eines Scheibenwischers und vorteilhaft eines Fahrzeugscheibenwischers, verstanden werden. Die Wischervorrichtung kann dabei insbesondere zusätzlich zumindest einen Wischarm und/oder zumindest ein, insbesondere mit dem zumindest einen Wischarm koppelbares, Wischblatt, vorteilhaft in Flachbalkenbauweise, umfassen. Das Wischblatt und der Wischarm sind vorteilhaft mittels des Wischblattadapters und des Wischarmadapters verbunden. Des Weiteren soll unter einem "Wischarmadapter" insbesondere ein Adapter verstanden werden, der einen Kontaktbereich zu einem Wischarmbauteil des Wischarms aufweist und vorzugsweise mit dem Wischarmbauteil unverlierbar verbunden ist und insbesondere dazu vorgesehen ist, einen Kopplungsbereich des Wischarmbauteils für eine Kopplung und/oder Kontaktierung mit einem Wischblattadapter bereitzustellen. Vorteilhaft ist der Wischarmadapter einstückig ausgebildet. Unter "einstückig" soll in diesem Zusammenhang insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt. Zudem soll unter einem "Wischblattadapter" insbesondere ein Adapter verstanden werden, der einen Kontaktbereich zu einem Wischblattbauteil des Wischblatts aufweist und vorzugsweise mit dem Wischblattbauteil unverlierbar verbunden ist und insbesondere dazu vorgesehen ist, einen Kopplungsbereich des Wischblattbauteils für eine Kopplung und/oder Kontaktierung mit einem Wischarmadapter bereitzustellen. Vorteilhaft ist der Wischblattadapter mehrteilig ausgebildet. Vorzugsweise umfasst der Wischblattadapter dabei einen, bevorzugt einstückig ausgebildeten, Grundkörper, welcher insbesondere in einem montierten Zustand an dem Wischblattbauteil angeordnet ist und bevorzugt zu einer Befestigung und/oder Kopplung der Zwischeneinheit vorgesehen ist. Insbesondere kann der Wischblattadapter dabei ferner eine Lagereinheit aufweisen, welche bevorzugt zumindest teilweise durch den Grundkörper und/oder die Zwischeneinheit ausgebildet ist und insbesondere in einem montierten Zustand die Zwischeneinheit beweglich relativ zu dem Grundkörper lagert.

Unter einer "Zwischeneinheit" soll in diesem Zusammenhang insbesondere eine, vorteilhaft einstückig ausgebildete, Einheit verstanden werden, welche in einem montierten Zustand zumindest teilweise, vorzugsweise zu wenigstens einem Großteil und besonders bevorzugt vollständig, zwischen dem Grundkörper und dem Wischarmadapter angeordnet ist und insbesondere den Kopplungsbereich für eine Kopplung und/oder Kontaktierung mit dem Wischarmadapter aufweist und/oder bereitstellt. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Ferner soll unter einer "Führungseinheit" insbesondere eine, vorzugsweise an der Zwischeneinheit angeordnete und vorteilhaft befestigte, Einheit verstanden werden, welche dazu vorgesehen ist, den Wischarmadapter zu einer Montage und/oder bei einer Montage relativ zu dem Wischblattadapter und insbesondere der Zwischeneinheit in einer Längsführungsrichtung, vorteilhaft in einer translatorischen Richtung, zu führen. Bevorzugt kann die Führungseinheit einstückig mit der Zwischeneinheit ausgebildet sein. Die Längsführungsrichtung ist dabei vorteilhaft zumindest im Wesentlichen parallel zur Längsrichtung. In diesem Zusammenhang soll unter einer "Längsrichtung" insbesondere eine Richtung verstanden werden, die zumindest im Wesentlichen parallel zu einer Längserstreckungsrichtung des Wischarmadapters und/oder des Wischblattadapters verläuft. Unter einer "Längserstreckungsrichtung" eines Objekts soll insbesondere eine Richtung verstanden werden, welche parallel zu einer längsten Kante und/oder Seite eines kleinsten, das Objekt gerade noch umschließenden, insbesondere gedachten, Quaders ist. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Des Weiteren soll unter einer "Arretierungseinheit" insbesondere eine, vorzugsweise an der Zwischeneinheit angeordnete und vorteilhaft befestigte, Einheit verstanden werden, welche insbesondere dazu vorgesehen ist, eine Bewegung des Wischarmadapters relativ zu dem Wischblattadapter in zumindest eine Richtung mechanisch zu blockieren. Bevorzugt umfasst die Arretierungseinheit dazu wenigstens ein Arretierungselement und/oder Rastelement. Besonders vorteilhaft umfasst die Arretierungseinheit mehrere Arretierungselemente und/oder Rastelemente. Bevorzugt kann die Arretierungseinheit zudem einstückig mit der Zwischeneinheit ausgebildet sein. Unter einem "Rastelement" soll insbesondere eine Element verstanden werden, das dazu vorgesehen ist, während eines Montagevorgangs federelastisch aus einer Ausgangsposition ausgelenkt zu werden und sich bei Erreichen einer Endmontageposition zur Herstellung einer Rastverbindung federelastisch zumindest teilweise zurück in die Ausgangsposition zu bewegen. Vorzugsweise weist das Rastelement dabei wenigstens einen Betätigungsabschnitt auf, welcher zu einer Betätigung bei einer Montage und/oder Demontage vorgesehen ist. Ferner soll unter einer "Querseite des Wischarmadapters" insbesondere eine Seite, vorteilhaft eine Stirnseite, des Wischarmadapters verstanden werden, welche insbesondere parallel zu einer senkrecht zur Längsrichtung ausgerichteten Seitenfläche eines kleinsten, insbesondere gedachten, Quaders ist, welcher das Objekt gerade noch vollständig umschließt. Unter "anliegen" soll insbesondere direkt in Kontakt, vorteilhaft flächig in Kontakt, stehen verstanden werden. Durch eine entsprechende Ausgestaltung der Wischervorrichtung kann insbesondere eine Effizienz, insbesondere eine Herstellungseffizienz, eine Fertigungseffizienz und/oder einer Kosteneffizienz, verbessert werden. Zudem kann vorteilhaft eine Flexibilität erhöht werden. Zudem kann ein Montage- und/oder Demontagevorgang vorteilhaft vereinfacht werden.

Ferner wird vorgeschlagen, dass die Arretierungseinheit eine Bewegung des Wischarmadapters relativ zu dem Wischblattadapter, insbesondere der Zwischeneinheit, in einer zu einer Montagerichtung entgegengesetzten Richtung einschränkt. Vorzugsweise ist die Montagerichtung dabei zumindest im Wesentlichen parallel zur Längsrichtung ausgerichtet. Hierdurch kann insbesondere eine vorteilhaft sichere und/oder einfach realisierbare Kopplung erreicht werden.

Die Arretierungseinheit könnte genau ein Rastelement aufweisen, welches in dem montierten Zustand an der Querseite des Wischarmadapters anliegt und insbesondere dazu vorgesehen ist, zur Bereitstellung einer Rastverbindung in einer Vertikalrichtung ausgelenkt zu werden. Zudem könnte die Arretierungseinheit zumindest ein weiteres Rastelement aufweisen, welches in dem montierten Zustand an einer dem Rastelement bezüglich der Längsrichtung gegenüberliegenden Querseite des Wischarmadapters anliegt. Gemäß einer besonders bevorzugten Ausgestaltung der Erfindung wird jedoch vorgeschlagen, dass die Arretierungseinheit zumindest ein weiteres Rastelement aufweist, welches in dem montierten Zustand an der Querseite des Wischarmadapters, insbesondere derselben Querseite wie das Rastelement, anliegt. Vorzugsweise ist/sind das Rastelement und/oder das weitere Rastelement in diesem Fall dazu vorgesehen, zur Bereitstellung einer Rastverbindung in einer Querrichtung ausgelenkt zu werden. Im vorliegenden Fall soll unter einer "Vertikalrichtung" insbesondere eine Richtung verstanden werden, welche senkrecht zu einer Wischfläche des Wischers und/oder der Wischervorrichtung ausgerichtet ist. Insbesondere ist die Vertikalrichtung dabei senkrecht zur Längsrichtung und senkrecht zur Querrichtung ausgerichtet. Ferner soll unter einer "Querrichtung" insbesondere eine Richtung verstanden werden, welche parallel zu einer Wischrichtung des Wischers und/oder der Wischervorrichtung ausgerichtet ist. Insbesondere ist die Querrichtung dabei senkrecht zur Längsrichtung und senkrecht zur Vertikalrichtung ausgerichtet. Hierdurch kann insbesondere ein Kraftaufwand bei einer Montage reduziert werden und gleichzeitig eine vorteilhaft betriebssichere Verbindung bereitgestellt werden.

Zudem wird vorgeschlagen, dass das Rastelement und das weitere Rastelement dazu vorgesehen sind, bei der Montage in verschiedene Richtungen, vorteilhaft entgegengesetzte Richtungen, ausgelenkt zu werden. Bevorzugt werden die Rastelemente dabei jeweils in Querrichtung ausgelenkt. Durch diese Ausgestaltung kann insbesondere eine vorteilhaft einfache Montage und/oder Demontage erreicht werden.

Des Weiteren wird vorgeschlagen, dass der Wischarmadapter zumindest eine Anschlageinheit aufweist, welche eine Bewegung des Wischarmadapters relativ zu dem Wischblattadapter, insbesondere der Zwischeneinheit, in zumindest eine, bevorzugt der Richtung der Arretierungseinheit entgegengesetzte, weitere Richtung, einschränkt. Unter einer "Anschlageinheit" soll dabei insbesondere eine Einheit verstanden werden, welche insbesondere dazu vorgesehen ist, mit einer, vorteilhaft an der Zwischeneinheit angeordneten und vorteilhaft befestigten, weiteren Anschlageinheit des Wischblattadapters zusammenzuwirken und hierdurch insbesondere eine Bewegung des Wischarmadapters relativ zu dem Wischblattadapter in zumindest eine Richtung mechanisch zu blockieren. Insbesondere verhindern die Arretierungseinheit und die Anschlageinheit eine Bewegung des Wischarmadapters relativ zu dem Wischblattadapter, insbesondere der Zwischeneinheit, in zueinander entgegengesetzten Richtungen, vorteilhaft parallel zur Längsrichtung, und wirken somit insbesondere zumindest teilweise zu einer Fixierung des Wischarmadapters an dem Wischblattadapter, insbesondere der Zwischeneinheit, zusammen. Bevorzugt umfasst die Anschlageinheit dazu wenigstens ein, vorteilhaft stegförmiges, Anschlagelement. Besonders vorteilhaft umfasst die Anschlageinheit mehrere, vorteilhaft stegförmige, Anschlagelemente, insbesondere zumindest zwei, vorzugsweise zumindest drei und besonders bevorzugt zumindest vier Anschlagelemente. Die Anschlagelemente sind dabei vorteilhaft an, insbesondere zu den Querseiten senkrecht angeordneten, Längsseiten des Wischarmadapters angeordnet. Zudem sind die Anschlagelemente vorteilhaft an einer dem Wischblattadapter zugewandten Seite des Wischarmadapters angeordnet. Hierdurch kann insbesondere eine vorteilhafte Kopplung erreicht werden.

Des Weiteren wird vorgeschlagen, dass die Anschlageinheit zumindest zwei Anschlagelemente aufweist, welche an einer selben Längsseite des Wischarmadapters angeordnet sind. Bevorzugt sind die Anschlagelemente dabei zumindest paarweise symmetrisch zueinander, insbesondere bezüglich einer Mittenebene, welche senkrecht zur Querrichtung angeordnet ist, und insbesondere an gegenüberliegenden Längsseiten des Wischarmadapters angeordnet. Hierdurch kann insbesondere eine besonders sichere Verbindung erreicht werden.

Zudem wird vorgeschlagen, dass der Wischblattadapter einen von der Zwischeneinheit getrennt ausgebildeten Grundkörper, insbesondere den bereits zuvor genannten Grundkörper, aufweist, welcher insbesondere zu einer Verbindung mit zumindest einem Wischblattbauteil vorgesehen ist. Hierdurch kann eine vorteilhaft flexible Wischervorrichtung bereitgestellt werden.

Ferner betrifft die Erfindung ein Verfahren zur Montage einer Wischervorrichtung, welche einen Wischarmadapter und einen Wischblattadapter aufweist, wobei der Wischblattadapter eine Zwischeneinheit aufweist, welche zu einer lösbaren Verbindung mit dem Wischarmadapter vorgesehen ist, wobei der Wischarmadapter in zumindest einem Montageschritt mittels einer Führungseinheit des Wischblattadapters in eine Längsführungsrichtung geführt wird und in einem montierten Zustand eine Bewegung des Wischarmadapters relativ zu dem Wischblattadapter in zumindest eine Richtung mittels einer Arretierungseinheit des Wischblattadapters, welche zumindest ein Rastelement aufweist, welches in dem montierten Zustand an einer Querseite des Wischarmadapters anliegt, eingeschränkt wird. Zudem kann das Rastelement vorteilhaft in dem Montageschritt zur Bereitstellung einer Rastverbindung in einer Vertikalrichtung ausgelenkt werden. Alternativ oder zusätzlich ist denkbar, dass das Rastelement in dem Montageschritt zur Bereitstellung einer Rastverbindung in einer Querrichtung ausgelenkt wird. Hierdurch kann insbesondere eine Effizienz, insbesondere eine Herstellungseffizienz, eine Fertigungseffizienz und/oder einer Kosteneffizienz, verbessert werden. Zudem kann vorteilhaft eine Flexibilität erhöht werden. Zudem kann ein Montage- und/oder Demontagevorgang vorteilhaft vereinfacht werden.

Erfindungsgemäß wird vorgeschlagen, dass der Wischarmadapter in zumindest einem Montageschritt, insbesondere einem Endmontageschritt, relativ zu dem Wischblattadapter, insbesondere der Zwischeneinheit, entgegen einer, insbesondere durch einen Wischarm definierten, Radialrichtung bewegt wird. Bevorzugt wird der Wischarmadapter in zumindest einem weiteren Montageschritt, insbesondere einem Zwischenmontageschritt, welcher insbesondere vor dem Montageschritt durchgeführt wird, in einer Richtung zumindest im Wesentlichen parallel zu der Vertikalrichtung und/oder in einer Rotationbewegung bewegt. Vorteilhaft werden dabei Anschlagelemente der Anschlageinheit in korrespondierenden Anschlagelementen der weiteren Anschlageinheit, vorteilhaft Vertiefungen, geführt. Unter einer "Radialrichtung" soll in diesem Zusammenhang insbesondere eine Richtung verstanden werden, welche parallel zu der Längsrichtung ausgerichtet und insbesondere von einer Anbindungsstelle des Wischarms in Richtung eines freien Endes des Wischarms gerichtet ist. Hierdurch kann insbesondere eine schnelle und/oder vorteilhaft betriebssichere Montage erreicht werden.

Die Wischervorrichtung und das Verfahren zur Montage der Wischervorrichtung sollen hierbei nicht auf die oben beschriebene Anwendung und Ausführungsform beschränkt sein. Insbesondere können die Wischervorrichtung und das Verfahren zur Montage der Wischervorrichtung zu einer Erfüllung einer hierin beschriebenen Funktionsweise eine von einer hierin genannten Anzahl von einzelnen Verfahrensschritten, Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: einen Teil eines beispielhaft als Fahrzeugscheibenwischer ausgebildeten Wischers mit einer Wischervorrichtung in einer teilweisen Explosionsdarstellung,
- Fig. 2: die Wischervorrichtung in einem montierten Zustand,
- Fig. 3: die Wischervorrichtung bei einem Montagevorgang in einem ersten Montageschritt,
- Fig. 4: die Wischervorrichtung bei einem Montagevorgang in einem zweiten Montageschritt,
- Fig. 5: die Wischervorrichtung bei einem Montagevorgang in einem dritten Montageschritt,
- Fig. 6: die Wischervorrichtung bei einem Demontagevorgang,
- Fig. 7: ein weiteres Ausführungsbeispiel eines Teils eines beispielhaft als Fahrzeugscheibenwischer ausgebildeten Wischers mit einer weiteren Wischervorrichtung in einer teilweisen Explosionsdarstellung,
- Fig. 8: die Wischervorrichtung aus Figur 7 in einem montierten Zustand,
- Fig. 9: die Wischervorrichtung aus Figur 7 bei einem Montagevorgang in einem ersten Montageschritt,
- Fig. 10: die Wischervorrichtung aus Figur 7 bei einem Montagevorgang in einem zweiten Montageschritt,
- Fig. 11: die Wischervorrichtung aus Figur 7 bei einem Demontagevorgang,
- Fig. 12: ein weiteres Ausführungsbeispiel eines Teils eines beispielhaft als Fahrzeugscheibenwischer ausgebildeten Wischers mit einer weiteren Wischervorrichtung in einer teilweisen Explosionsdarstellung,
- Fig. 13: die Wischervorrichtung aus Figur 12 in einem montierten Zustand,
- Fig. 14: die Wischervorrichtung aus Figur 12 bei einem Montagevorgang in einem ersten Montageschritt,
- Fig. 15: die Wischervorrichtung aus Figur 12 bei einem Montagevorgang in einem zweiten Montageschritt,
- Fig. 16: die Wischervorrichtung aus Figur 12 bei einem Demontagevorgang,
- Fig. 17: ein weiteres Ausführungsbeispiel eines Teils eines beispielhaft als Fahrzeugscheibenwischer ausgebildeten Wischers mit einer weiteren Wischervorrichtung in einem montierten Zustand,
- Fig. 18: die Wischervorrichtung aus Figur 17 bei einem Montagevorgang in einem ersten Montageschritt,
- Fig. 19: die Wischervorrichtung aus Figur 17 bei einem Montagevorgang in einem zweiten Montageschritt,
- Fig. 20: ein weiteres Ausführungsbeispiel eines Teils eines beispielhaft als Fahrzeugscheibenwischer ausgebildeten Wischers mit einer weiteren Wischervorrichtung in einem montierten Zustand,
- Fig. 21: die Wischervorrichtung aus Figur 20 in einem teilweise demontierten Zustand,
- Fig. 22: die Wischervorrichtung aus Figur 20 in einem teilweise demontierten weiteren Zustand,
- Fig. 23: die Wischervorrichtung aus Figur 20 bei einem Montagevorgang in einem ersten Montageschritt und
- Fig. 24: die Wischervorrichtung aus Figur 20 bei einem Montagevorgang in einem zweiten Montageschritt.

### Beschreibung der Ausführungsbeispiele

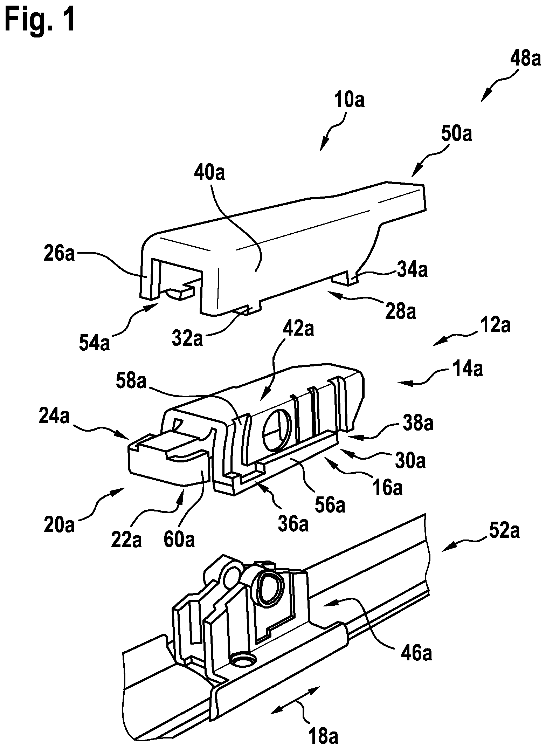

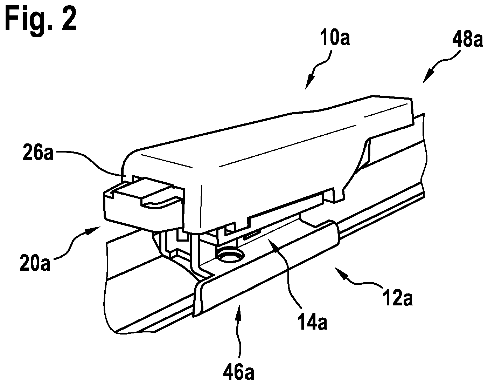

Die Figuren 1 und 2 zeigen einen Teil eines beispielhaft als Fahrzeugscheibenwischer ausgebildeten Wischers 48a mit einer Wischervorrichtung in einer teilweisen Explosionsdarstellung (vgl. Figur 1) und in einem montierten Zustand (vgl. Figur 2). Die Wischervorrichtung umfasst einen Wischarmadapter 10a und einen Wischblattadapter 12a, welche zur Kopplung eines Wischarms 50a mit einem Wischblatt 52a dienen.

Der Wischarmadapter 10a ist einstückig ausgebildet. Der Wischarmadapter 10a ist an dem Wischarm 50a angeordnet. Im vorliegenden Fall ist der Wischarmadapter 10a einstückig mit dem Wischarm 50a ausgebildet. Der Wischarmadapter 10a weist zwei Querseiten 26a und zwei senkrecht zu den Querseiten 26a angeordnete Längsseiten 40a auf, wobei insbesondere in den Figuren lediglich eine der Querseiten 26a und eine der Längsseiten 40a mit Bezugszeichen versehen sind. Eine Querseite 26a der Querseiten 26a, welche insbesondere als Stirnseite des Wischarmadapters 10a ausgebildet ist und an einer dem Wischarm 50a abgewandten Seite des Wischarmadapters 10a angeordnet ist, weist dabei eine Aufnahmeöffnung 54a, im vorliegenden Fall insbesondere mit einer rechteckigen Form und/oder Kontur, auf. Alternativ könnte ein Wischarmadapter jedoch auch frei von einer Aufnahmeöffnung ausgebildet sein. Der Wischarmadapter 10a ist dazu vorgesehen, einen Kopplungsbereich für eine Kopplung und/oder Kontaktierung mit dem Wischblattadapter 12a bereitzustellen.

Ferner umfasst der Wischarmadapter 10a im vorliegenden Fall eine Anschlageinheit 28a. Die Anschlageinheit 28a ist an einer dem Wischblattadapter 12a zugewandten Seite des Wischarmadapters 10a angeordnet. Die Anschlageinheit 28a ist dazu vorgesehen, eine Bewegung des Wischarmadapters 10a relativ zu dem Wischblattadapter 12a einzuschränken.

Dazu umfasst die Anschlageinheit 28a mehrere Anschlagelemente 32a, 34a. Im vorliegenden Fall umfasst die Anschlageinheit 28a beispielhaft vier Anschlagelemente 32a, 34a, wobei in den Figuren lediglich zwei der Anschlagelemente 32a, 34a mit Bezugszeichen versehen sind. Die Anschlagelemente 32a, 34a sind stegförmig ausgebildet. Die Anschlagelemente 32a, 34a sind an den Längsseiten 40a des Wischarmadapters 10a angeordnet. Im vorliegenden Fall sind beispielhaft an jeder Längsseite 40a des Wischarmadapters 10a zwei, insbesondere in Längsrichtung zueinander versetzte, Anschlagelemente 32a, 34a angeordnet. Alternativ könnte eine Anschlageinheit jedoch auch genau zwei Anschlagelemente und/oder zumindest sechs Anschlagelemente aufweisen. Zudem ist denkbar auf eine Anschlageinheit vollständig zu verzichten.

Der Wischblattadapter 12a ist mehrteilig ausgebildet. Im vorliegenden Fall ist der Wischblattadapter 12a zumindest zweiteilig ausgebildet. Der Wischblattadapter 12a ist an dem Wischblatt 52a angeordnet, insbesondere befestigt. Zudem ist der Wischblattadapter 12a dazu vorgesehen, einen Kopplungsbereich für eine Kopplung und/oder Kontaktierung mit dem Wischarmadapter 10a bereitzustellen.

Der Wischblattadapter 12a umfasst einen Grundkörper 46a. Der Grundkörper 46a ist einstückig ausgebildet. Der Grundkörper 46a ist zu einer unmittelbaren Verbindung mit dem Wischblatt 52a und/oder wenigstens einem Wischblattbauteil des Wischblatts 52a vorgesehen.

Ferner umfasst der Wischblattadapter 12a eine Zwischeneinheit 14a. Die Zwischeneinheit 14a ist einstückig ausgebildet. Die Zwischeneinheit 14a ist getrennt von dem Grundkörper 46a ausgebildet. Die Zwischeneinheit 14a ist zu einer Kopplung mit dem Grundkörper 46a vorgesehen. Die Zwischeneinheit 14a umgreift den Grundkörper 46a in einem montierten Zustand zu wenigstens einem Großteil. Die Zwischeneinheit 14a ist dabei im montierten Zustand derart mit dem Grundkörper 46a gekoppelt, dass die Zwischeneinheit 14a beweglich relativ zu dem Grundkörper 46a gelagert ist. Ferner ist die Zwischeneinheit 14a zu einer lösbaren Verbindung mit dem Wischarmadapter 10a vorgesehen. Die Zwischeneinheit 14a ist dazu vorgesehen, einen Kopplungsbereich für eine Kopplung und/oder Kontaktierung mit dem Wischarmadapter 10a bereitzustellen. Dazu ist die Zwischeneinheit 14a im montierten Zustand zwischen dem Grundkörper 46a und dem Wischarmadapter 10a angeordnet, insbesondere derart, dass die Zwischeneinheit 14a den Grundkörper 46a und den Wischarmadapter 10a unmittelbar kontaktiert. Im montierten Zustand umgreift der Wischarmadapter 10a die Zwischeneinheit 14a zu wenigstens einem Großteil. Zudem umgreift der Wischarmadapter 10a im montierten Zustand den Grundkörper 46a zu wenigstens einem Großteil.

Des Weiteren umfasst der Wischblattadapter 12a eine Führungseinheit 16a. Die Führungseinheit 16a ist als Längsführungseinheit ausgebildet. Die Führungseinheit 16a ist an der Zwischeneinheit 14a angeordnet. Im vorliegenden Fall ist die Führungseinheit 16a einstückig mit der Zwischeneinheit 14a verbunden. Die Führungseinheit 16a ist zu einer Führung des Wischarmadapters 10a bei einer Montage und/oder Demontage in eine Längsführungsrichtung 18a vorgesehen. Im vorliegenden Fall ist die Führungseinheit 16a dazu vorgesehen, den Wischarmadapter 10a zu einer Montage und/oder bei einer Montage relativ zu dem Wischblattadapter 12a und insbesondere der Zwischeneinheit 14a in einer translatorischen Richtung zu führen.

Dazu umfasst die Führungseinheit 16a zwei Längsführungselemente 56a, wobei in den Figuren lediglich eines der Längsführungselemente 56a mit Bezugszeichen versehen ist. Die Längsführungselemente 56a sind auf gegenüberliegenden Längsseiten der Zwischeneinheit 14a angeordnet. Die Längsführungselemente 56a sind stegförmig ausgebildet. Die Längsführungselemente 56a erstrecken sich jeweils zumindest über einen Großteil einer Längserstreckung der Zwischeneinheit 14a. Alternativ ist jedoch auch denkbar, Längsführungselemente als Führungskulissen auszubilden.

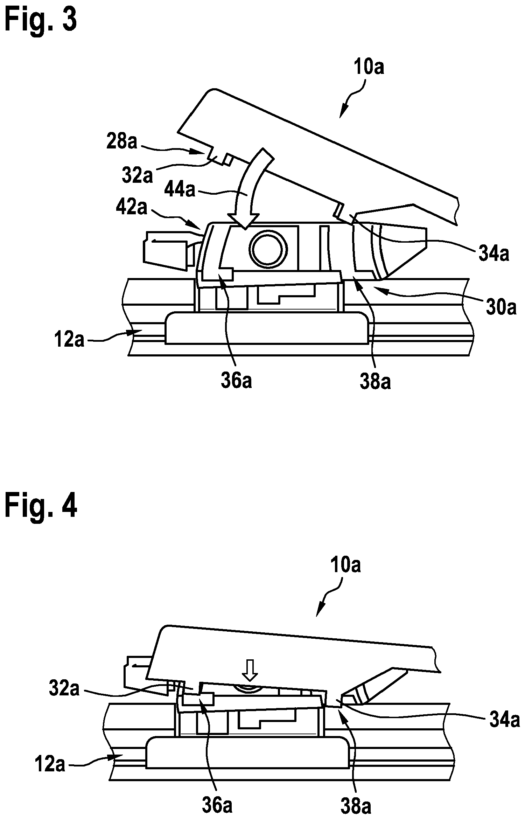

Darüber hinaus umfasst der Wischblattadapter 12a eine weitere Führungseinheit 42a. Die weitere Führungseinheit 42a ist als Vertikalführungseinheit ausgebildet. Die weitere Führungseinheit 42a ist an der Zwischeneinheit 14a angeordnet. Im vorliegenden Fall ist die weitere Führungseinheit 42a einstückig mit der Zwischeneinheit 14a verbunden. Die weitere Führungseinheit 42a ist zu einer Führung des Wischarmadapters 10a bei einer Montage und/oder Demontage in eine insbesondere zu der Längsführungsrichtung 18a verschiedene Führungsrichtung 44a vorgesehen (vgl. auch Figur 3). Im vorliegenden Fall ist die weitere Führungseinheit 42a dazu vorgesehen, den Wischarmadapter 10a zu einer Montage und/oder bei einer Montage relativ zu dem Wischblattadapter 12a und insbesondere der Zwischeneinheit 14a in einer Rotationsbewegung zu führen.

Dazu umfasst die weitere Führungseinheit 42a zumindest zwei Vertikalführungselemente 58a, wobei in den Figuren lediglich eines der Vertikalführungselemente 58a mit Bezugszeichen versehen ist. Die Vertikalführungselemente 58a sind auf gegenüberliegenden Längsseiten der Zwischeneinheit 14a angeordnet. Die Vertikalführungselemente 58a sind als, insbesondere radial verlaufende, Führungskulissen ausgebildet. Die Vertikalführungselemente 58a erstrecken sich jeweils zumindest über einen Großteil einer Vertikalerstreckung der Zwischeneinheit 14a. Alternativ ist jedoch auch denkbar, Vertikalführungselemente als Führungsstege auszubilden.

Ferner umfasst der Wischblattadapter 12a eine weitere Anschlageinheit 30a. Die weitere Anschlageinheit 30a ist an der Zwischeneinheit 14a angeordnet. Im vorliegenden Fall ist die weitere Anschlageinheit 30a einstückig mit der Zwischeneinheit 14a verbunden. Die weitere Anschlageinheit 30a ist an einer dem Grundkörper 46a zugewandten Seite der Zwischeneinheit 14a angeordnet. Die weitere Anschlageinheit 30a ist dazu vorgesehen, eine Bewegung des Wischarmadapters 10a relativ zu dem Wischblattadapter 12a einzuschränken. Im vorliegenden Fall ist die weitere Anschlageinheit 30a dazu vorgesehen, mit der Anschlageinheit 28a zusammenzuwirken, um eine Bewegung des Wischarmadapters 10a relativ zu dem Wischblattadapter 12a einzuschränken.

Dazu umfasst die weitere Anschlageinheit 30a mehrere weitere Anschlagelemente 36a, 38a. Im vorliegenden Fall umfasst die weitere Anschlageinheit 30a beispielhaft vier weitere Anschlagelemente 36a, 38a, wobei in den Figuren lediglich zwei der weiteren Anschlagelemente 36a, 38a mit Bezugszeichen versehen sind. Die weiteren Anschlagelemente 36a, 38a sind korrespondierend zu den Anschlagelementen 32a, 34a ausgebildet. Die weiteren Anschlagelemente 36a, 38a sind als Vertiefungen und/oder Ausnehmungen, insbesondere im Bereich der Führungseinheit 16a, ausgebildet. Die weiteren Anschlagelemente 36a, 38a sind an den Längsseiten der Zwischeneinheit 14a angeordnet. Im vorliegenden Fall sind beispielhaft an jeder Längsseite der Zwischeneinheit 14a zwei, insbesondere in Längsrichtung zueinander versetzte, weitere Anschlagelemente 36a, 38a angeordnet. Alternativ könnte eine weitere Anschlageinheit jedoch auch genau zwei weitere Anschlagelemente und/oder zumindest sechs weitere Anschlagelemente aufweisen. Zudem ist denkbar auf eine weitere Anschlageinheit vollständig zu verzichten.

Weiter umfasst der Wischblattadapter 12a eine Arretierungseinheit 20a. Die Arretierungseinheit 20a ist als Rasteinheit ausgebildet. Die Arretierungseinheit 20a ist an der Zwischeneinheit 14a angeordnet. Im vorliegenden Fall ist die Arretierungseinheit 20a einstückig mit der Zwischeneinheit 14a verbunden. Die Arretierungseinheit 20a ist an einer Querseite der Zwischeneinheit 14a angeordnet. Die Die Arretierungseinheit 20a ist dabei auf einer zu der Querseite 26a des Wischarmadapters 10a korrespondierenden Querseite der Zwischeneinheit 14a angeordnet. Die Arretierungseinheit 20a durchstößt in einem montierten Zustand die Aufnahmeöffnung 54a. Die Arretierungseinheit 20a schränkt in einem montierten Zustand eine Bewegung des Wischarmadapters 10a relativ zu dem Wischblattadapter 12a in zumindest eine Richtung ein. Im vorliegenden Fall ist die Arretierungseinheit 20a dazu vorgesehen, im montierten Zustand eine Bewegung des Wischarmadapters 10a relativ zu dem Wischblattadapter 12a in eine Längsrichtung und insbesondere in eine zu einer Montagerichtung 27a entgegengesetzte Richtung einzuschränken.

Dazu umfasst die Arretierungseinheit 20a wenigstens ein Rastelement 22a, 24a. Im vorliegenden Fall umfasst die Arretierungseinheit 20a zwei Rastelemente 22a, 24a. Die Rastelemente 22a, 24a sind dazu vorgesehen, bei der Montage in verschiedene Richtungen ausgelenkt zu werden. Im vorliegenden Fall sind die Rastelemente 22a, 24a dazu vorgesehen, in entgegengesetzte Richtungen, insbesondere Querrichtungen, ausgelenkt zu werden. Die Rastelemente 22a, 24a bewegen sich dabei bei der Montage federelastisch aufeinander zu. Zudem liegen die Rastelemente 22a, 24a in einem montierten Zustand, insbesondere zur Einschränkung der Bewegung des Wischarmadapters 10a relativ zu dem Wischblattadapter 12a, an der Querseite 26a des Wischarmadapters 10a an. Im vorliegenden Fall durchstoßen die Rastelemente 22a, 24a dabei bei der Montage die Aufnahmeöffnung 54a und liegen im montierten Zustand an einer Außenseite des Wischarmadapters 10a an. Darüber hinaus weisen die Rastelemente 22a, 24a jeweils einen Betätigungsabschnitt 60a auf, welcher zu einer Betätigung bei einer Montage und/oder Demontage dient. Prinzipiell könnte eine Arretierungseinheit auch genau ein Rastelement und/oder drei Rastelemente aufweisen.

Die Arretierungseinheit 20a und die Anschlageinheiten 28a, 30a verhindern eine Bewegung des Wischarmadapters 10a relativ zu dem Wischblattadapter 12a in zueinander entgegengesetzten Richtungen parallel zur Längsrichtung und wirken somit insbesondere zur Fixierung des Wischarmadapters 10a an dem Wischblattadapter 12a zusammen.

Die Figuren 3 bis 5 zeigen beispielhaft ein Verfahren zur Montage der Wischervorrichtung.

In einem ersten Montageschritt, welcher insbesondere in den Figuren 3 und 4 dargestellt ist, wird der Wischarmadapter 10a in einer Rotationbewegung bewegt, wobei die weitere Führungseinheit 42a zu einer Führung des Wischarmadapters 10a dient. Dabei werden zudem die Anschlagelemente 32a, 34a der Anschlageinheit 28a in den korrespondierenden weiteren Anschlagelementen 36a, 38a der weiteren Anschlageinheit 30a geführt.

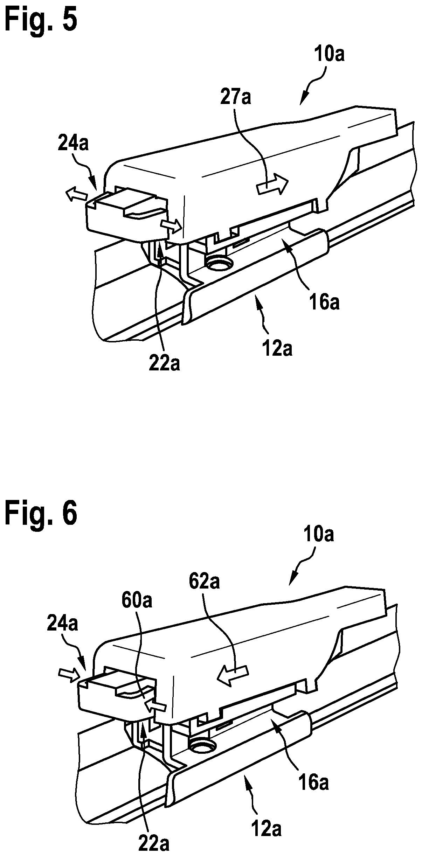

In einem zweiten Montageschritt, welcher insbesondere in Figur 5 dargestellt ist, wird der Wischarmadapter 10a mittels der Führungseinheit 16a in die Längsführungsrichtung 18a und/oder die Montagerichtung 27a geführt. Im vorliegenden Fall wird der Wischarmadapter 10a dabei relativ zu dem Wischblattadapter 12a entgegen einer Radialrichtung bewegt. Dabei werden die Rastelemente 22a, 24a durch eine Innenseite der Querseite 26a federelastisch ausgelenkt, insbesondere derart, dass die Rastelemente 22a, 24a die Aufnahmeöffnung 54a durchstoßen. Anschließend bewegen sich die Rastelemente 22a, 24a federelastisch zurück in eine jeweilige Ausgangsposition, sodass die Rastelemente 22a, 24a im montierten Zustand an einer Außenseite des Wischarmadapters 10a, insbesondere der Querseite 26a, anliegen. Die Rastelemente 22a, 24a werden dabei zur Bereitstellung einer Rastverbindung in Querrichtung ausgelenkt.

Figur 6 zeigt beispielhaft einen Demontagevorgang. Zu einer Demontage werden zunächst die Betätigungsabschnitte 60a der Rastelemente 22a, 24a betätigt, insbesondere derart, dass die Rastelemente 22a, 24a aufeinander zu bewegt werden. Anschließend wird der Wischarmadapter 10a mittels der Führungseinheit 16a in die Längsführungsrichtung 18a und/oder eine der Montagerichtung 27a entgegengerichtete Demontagerichtung 62a geführt.

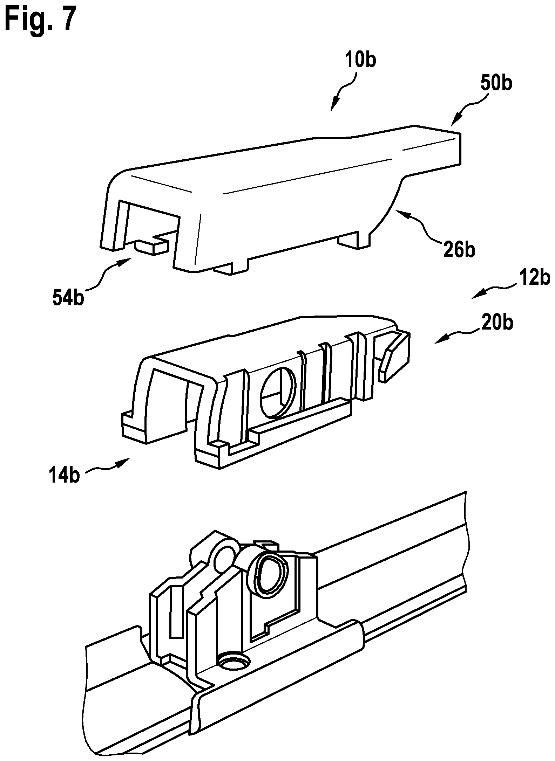

In den Figuren 7 bis 24 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 24 ist der Buchstabe a durch die Buchstaben b bis e ersetzt.

In den Figuren 7 bis 11 ist ein weiteres Ausführungsbeispiel der Erfindung gezeigt. Dem Ausführungsbeispiel der Figuren 7 bis 11 ist der Buchstabe b nachgestellt. Das weitere Ausführungsbeispiel der Figuren 7 bis 11 unterscheidet sich von dem vorherigen Ausführungsbeispiel zumindest im Wesentlichen durch eine Ausgestaltung eines Wischblattadapters 12b einer Wischervorrichtung.

Ein Wischarmadapter 10b entspricht dem Wischarmadapter 10a des vorhergehenden Ausführungsbeispiels. Der Wischarmadapter 10b umfasst eine erste Querseite, welche eine Aufnahmeöffnung 54b, im vorliegenden Fall insbesondere mit einer rechteckigen Form und/oder Kontur, aufweist. Ein zweite Querseite 26b ist an einer einem Wischarm 50b zugewandten Seite des Wischarmadapters 10b angeordnet.

Ferner ist eine Arretierungseinheit 20b auf einer zu der zweiten Querseite 26b des Wischarmadapters 10b korrespondierenden Querseite einer Zwischeneinheit 14b angeordnet. Die Arretierungseinheit 20b ist somit auf einer in einem Vergleich zu der Arretierungseinheit 20a des vorherigen Ausführungsbeispiels gegenüberliegenden Seite angeordnet.

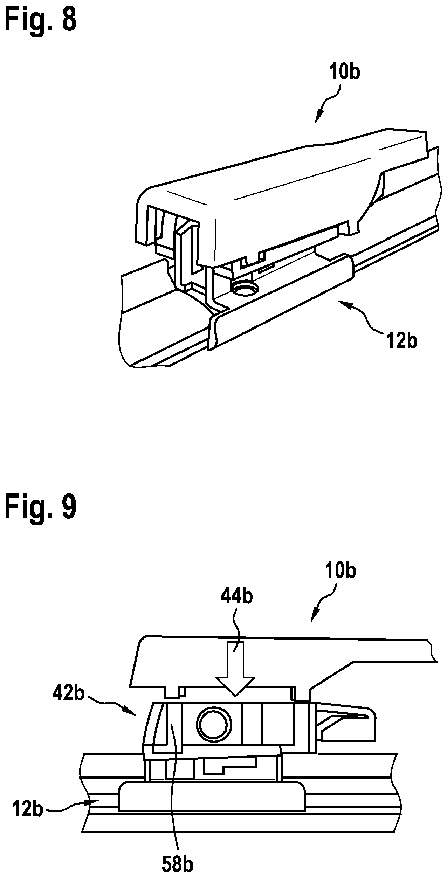

Darüber hinaus ist eine weitere Führungseinheit 42b zu einer Führung des Wischarmadapters 10b bei einer Montage und/oder Demontage in eine als Vertikalrichtung ausgebildete Führungsrichtung 44a vorgesehen (vgl. auch Figur 9). Vertikalführungselemente 58b sind dabei als, insbesondere vertikal verlaufende, Führungskulissen ausgebildet.

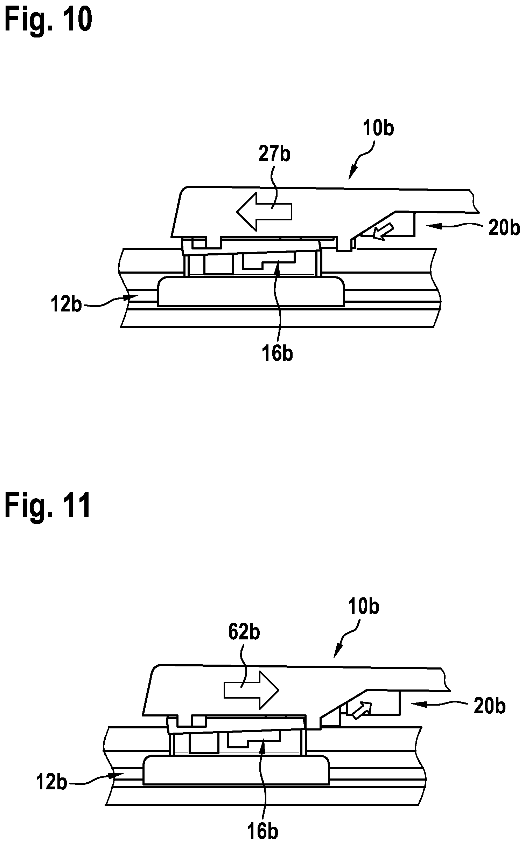

Die Figuren 9 und 10 zeigen beispielhaft ein Verfahren zur Montage der Wischervorrichtung.

In einem ersten Montageschritt, welcher insbesondere in den Figur 9 dargestellt ist, wird der Wischarmadapter 10b in einer Linearbewegung bewegt, wobei die weitere Führungseinheit 42b zu einer Führung des Wischarmadapters 10b dient.

In einem zweiten Montageschritt, welcher insbesondere in Figur 10 dargestellt ist, wird der Wischarmadapter 10b mittels einer Führungseinheit 16b in eine Montagerichtung 27b geführt. Im vorliegenden Fall wird der Wischarmadapter 10b dabei relativ zu dem Wischblattadapter 12b in einer Radialrichtung bewegt.

Figur 11 zeigt beispielhaft einen Demontagevorgang, bei welchem der Wischarmadapter 10b mittels der Führungseinheit 16b in eine der Montagerichtung 27b entgegengerichtete Demontagerichtung 62b geführt wird.

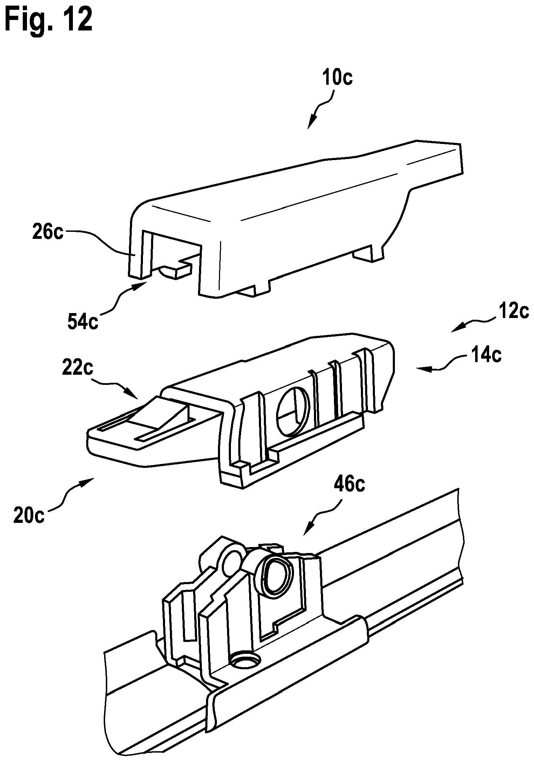

In den Figuren 12 bis 16 ist ein weiteres Ausführungsbeispiel der Erfindung gezeigt. Dem Ausführungsbeispiel der Figuren 12 bis 16 ist der Buchstabe c nachgestellt. Das weitere Ausführungsbeispiel der Figuren 12 bis 16 unterscheidet sich von den vorherigen Ausführungsbeispielen zumindest im Wesentlichen durch eine Ausgestaltung eines Wischblattadapters 12c einer Wischervorrichtung. Ein Wischarmadapter 10c entspricht dem Wischarmadapter 10a und dem Wischarmadapter 10b der vorhergehenden Ausführungsbeispiele.

Im vorliegenden Fall umfasst eine Arretierungseinheit 20c genau ein, insbesondere zumindest im Wesentlichen rampenförmiges, Rastelement 22c. Das Rastelement 22c ist dazu vorgesehen, in Vertikalrichtung, insbesondere bezüglich einer Zwischeneinheit 14c und insbesondere in Richtung eines Grundkörpers 46c, ausgelenkt zu werden.

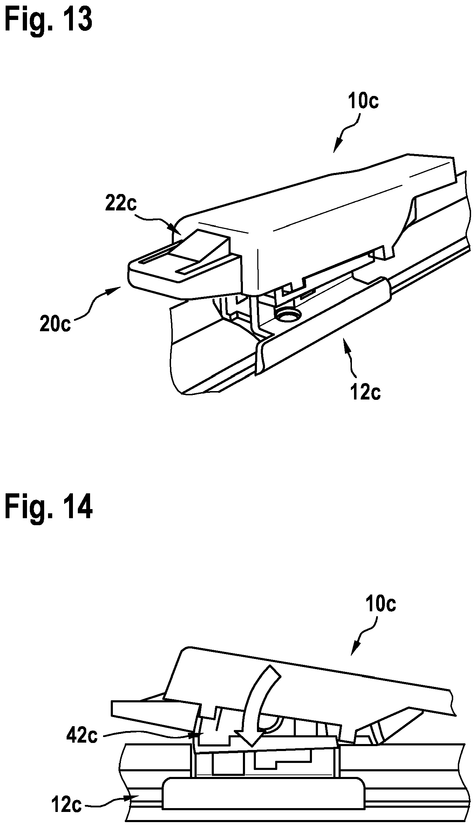

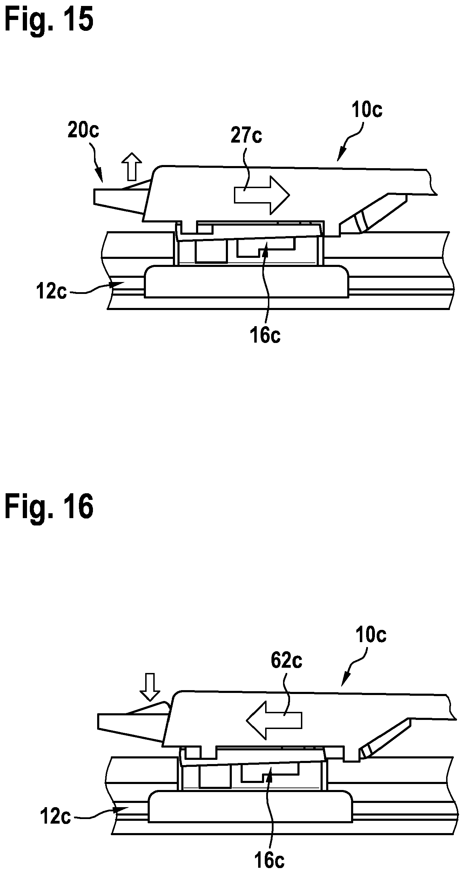

Die Figuren 14 und 15 zeigen beispielhaft ein Verfahren zur Montage der Wischervorrichtung.

In einem ersten Montageschritt, welcher insbesondere in Figur 14 dargestellt ist, wird der Wischarmadapter 10c in einer Rotationsbewegung bewegt, wobei eine weitere Führungseinheit 42c zu einer Führung des Wischarmadapters 10c dient.

In einem zweiten Montageschritt, welcher insbesondere in Figur 15 dargestellt ist, wird der Wischarmadapter 10c mittels einer Führungseinheit 16c in eine Montagerichtung 27c geführt. Im vorliegenden Fall wird der Wischarmadapter 10c dabei relativ zu dem Wischblattadapter 12c entgegen einer Radialrichtung bewegt. Dabei wird das Rastelement 22c durch eine Innenseite einer Querseite 26c federelastisch ausgelenkt, insbesondere derart, dass das Rastelement 22c eine Aufnahmeöffnung 54c durchstößt. Anschließend bewegt sich das Rastelement 22c federelastisch zurück in seine Ausgangsposition, sodass das Rastelement 22c im montierten Zustand an einer Außenseite des Wischarmadapters 10c, insbesondere der Querseite 26c, anliegt. Das Rastelement 22c wird dabei zur Bereitstellung einer Rastverbindung in Vertikalrichtung ausgelenkt.

Figur 16 zeigt beispielhaft einen Demontagevorgang, bei welchem der Wischarmadapter 10c mittels der Führungseinheit 16c in eine der Montagerichtung 27c entgegengerichtete Demontagerichtung 62c geführt wird.

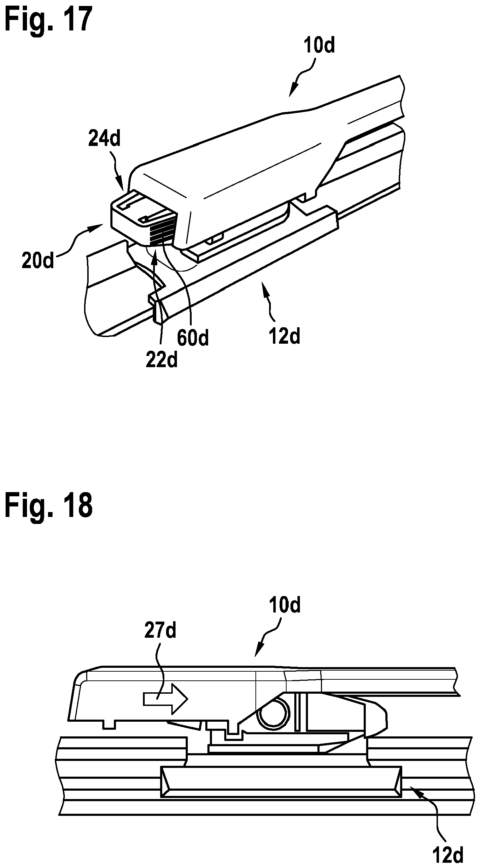

In den Figuren 17 bis 19 ist ein weiteres Ausführungsbeispiel der Erfindung gezeigt. Dem Ausführungsbeispiel der Figuren 17 bis 19 ist der Buchstabe d nachgestellt. Das weitere Ausführungsbeispiel der Figuren 17 bis 19 unterscheidet sich von den vorherigen Ausführungsbeispielen zumindest im Wesentlichen durch eine Ausgestaltung eines Wischblattadapters 12d einer Wischervorrichtung. Ein Wischarmadapter 10d entspricht dem Wischarmadapter 10a, dem Wischarmadapter 10b und dem Wischarmadapter 10c der vorhergehenden Ausführungsbeispiele.

Im vorliegenden Fall umfasst eine Arretierungseinheit 20d zwei Rastelemente 22d, 24d mit strukturierten Betätigungsabschnitten 60d, wodurch vorteilhaft eine Handhabung der Wischervorrichtung insbesondere bei einer Demontage verbessert werden kann.

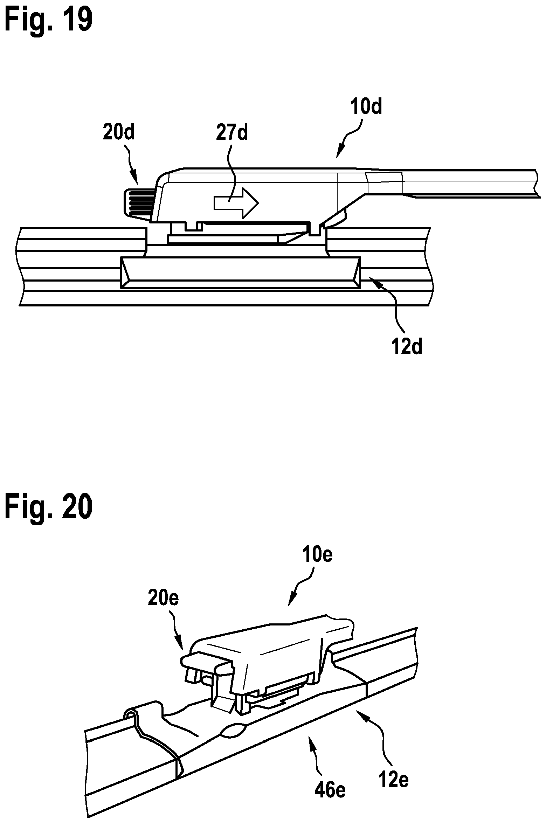

Die Figuren 18 und 19 zeigen beispielhaft ein Verfahren zur Montage der Wischervorrichtung in eine Montagerichtung 27d.

In den Figuren 20 bis 24 ist ein weiteres Ausführungsbeispiel der Erfindung gezeigt. Dem Ausführungsbeispiel der Figuren 20 bis 24 ist der Buchstabe e nachgestellt. Das weitere Ausführungsbeispiel der Figuren 20 bis 24 unterscheidet sich von den vorherigen Ausführungsbeispielen zumindest im Wesentlichen durch eine Ausgestaltung eines Wischblattadapters 12e einer Wischervorrichtung. Ein Wischarmadapter 10e entspricht dem Wischarmadapter 10a, dem Wischarmadapter 10b, dem Wischarmadapter 10c und dem Wischarmadapter 10d der vorhergehenden Ausführungsbeispiele.

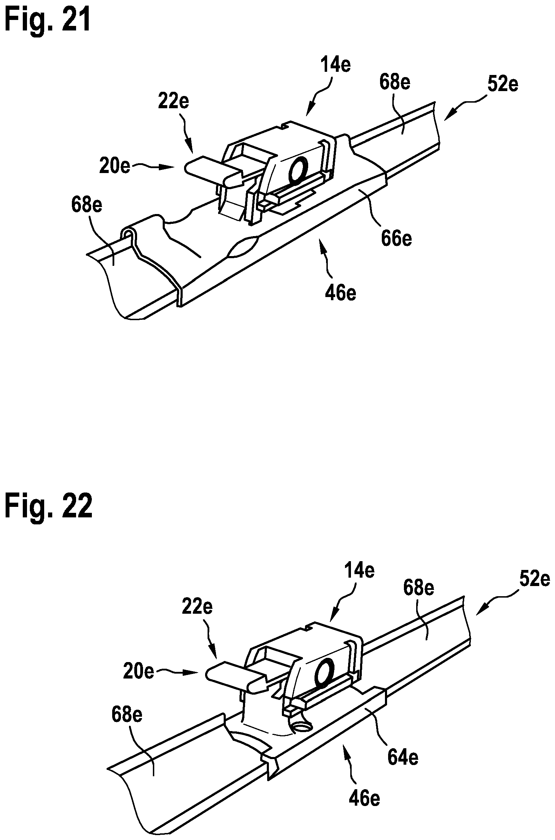

Ein Grundkörper 46e des Wischblattadapters 12e ist im vorliegenden Fall zweiteilig ausgebildet und umfasst ein erstes Grundkörperteil 64e und ein zweites Grundkörperteil 66e (vgl. insbesondere Figuren 21 und 22). Das erste Grundkörperteil 64e entspricht dabei zumindest im Wesentlichen dem Grundkörper 46a-d der vorhergehenden Ausführungsbeispiele. Das erste Grundkörperteil 64e ist somit zu einer Kopplung mit einer Zwischeneinheit 14e vorgesehen. Das zweite Grundkörperteil 66e ist als Abdeckteil ausgebildet und umgreift das erste Grundkörperteil 64e zumindest teilweise und vorzugsweise zu wenigstens einem Großteil. Zudem umgreift das zweite Grundkörperteil 66e Windabweiserelemente 68e eines Wischblatt 52e zumindest teilweise, wodurch insbesondere eine verbesserte Windabweisung und/oder Anpressung des Wischblatts 52e erreicht werden kann.

Darüber hinaus umfasst eine Arretierungseinheit 20e genau ein, insbesondere zumindest im Wesentlichen fingerförmiges und/oder zungenförmiges, Rastelement 22e. Das Rastelement 22e ist dazu vorgesehen, in Vertikalrichtung, insbesondere bezüglich der Zwischeneinheit 14e und insbesondere in Richtung des Grundkörpers 46e, ausgelenkt zu werden.

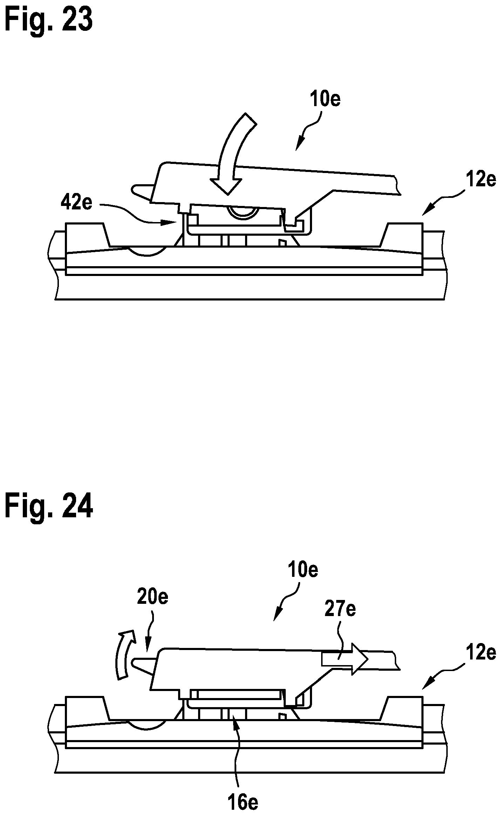

Die Figuren 23 und 24 zeigen beispielhaft ein Verfahren zur Montage der Wischervorrichtung.

In einem ersten Montageschritt, welcher insbesondere in Figur 23 dargestellt ist, wird der Wischarmadapter 10e in einer Rotationsbewegung bewegt, wobei eine weitere Führungseinheit 42e zu einer Führung des Wischarmadapters 10e dient.

In einem zweiten Montageschritt, welcher insbesondere in Figur 24 dargestellt ist, wird der Wischarmadapter 10e mittels einer Führungseinheit 16e in eine Montagerichtung 27e geführt. Im vorliegenden Fall wird der Wischarmadapter 10e dabei relativ zu dem Wischblattadapter 12e entgegen einer Radialrichtung bewegt. Das Rastelement 22e wird ferner zur Bereitstellung einer Rastverbindung in Vertikalrichtung ausgelenkt.

## Patentansprüche

1. Wischervorrichtung mit einem Wischarmadapter (10a-e) und mit einem Wischbiattadapter (12a-e), der eine Zwischeneinheit (14a; 14b; 14c; 14e), welche zu einer lösbaren Verbindung mit dem Wischarmadapter (10a-e) vorgesehen ist, eine Führungseinheit (16a; 16b; 16c; 16e), welche zur Führung des Wischarmadapters (10a-e) bei einer Montage in eine Längsführungsrichtung (18a) vorgesehen ist, und eine Arretierungseinheit (20a-e) aufweist, welche in einem montierten Zustand eine Bewegung des Wischarmadapters (10a-e) relativ zu dem Wischblattadapter (12a-e) in zumindest eine Richtung einschränkt, wobei die Arretierungseinheit (20a-e) zumindest ein Rastelement (22a, 24a; 22c; 22d, 24d; 22e) aufweist, welches in dem montierten Zustand an einer Querseite (26a; 26b; 26c) des Wischarmadapters (10a-e) anliegt, wobei der Wischblattadapter (12a-e) eine weitere Führungseinheit (42a-e) aufweist, welche zur Führung des Wischarmadapters (10a-e) bei der Montage in zumindest einer zu der Längsführungsrichtung (18a) verschiedenen weiteren Führungsrichtung (44a; 44b) vorgesehen ist, **dadurch gekennzeichnet, dass** die weitere Führungseinheit (42a-e) dazu vorgesehen ist, den Wischarmadapter (10a-e) zu einer Montage und/oder bei einer Montage relativ zu dem Wischblattadapter (12a-e) in einer Rotationsbewegung zu führen.

2. Wischervorrichtung nach Anspruch 1, **dadurch gekennzeichnet, dass** die Arretierungseinheit (20a-e) eine Bewegung des Wischarmadapters (10a-e) relativ zu dem Wischbiattadapter (12a-e) in einer einer Montagerichtung (27a-e) entgegengesetzten Richtung einschränkt.

3. Wischervorrichtung nach Anspruch 1 oder 2, **dadurch gekennzeichnet, dass** die Arretierungseinheit (20a; 20b; 20d) zumindest ein weiteres Rastelement (22a, 24a; 22d, 24d) aufweist, welches in dem montierten Zustand an der Querseite (26a; 26b) des Wischarmadapters (10a-e) anliegt.

4. Wischervorrichtung nach Anspruch 3, **dadurch gekennzeichnet, dass** das Rastelement (22a, 24a; 22d, 24d) und das weitere Rastelement (22a, 24a; 22d, 24d) dazu vorgesehen sind, bei der Montage in verschiedene Richtungen ausgelenkt zu werden.

5. Wischervorrichtung nach einem der vorhergehenden Ansprüche, **dadurch gekennzeichnet, dass** die Arretierungseinheit (20a-e) an der Zwischeneinheit (14a; 14b; 14c; 14e) angeordnet ist.

6. Wischervorrichtung nach einem der vorhergehenden Ansprüche, **dadurch gekennzeichnet, dass** der Wischarmadapter (10a-e) zumindest eine Anschlageinheit (28a) aufweist, welche eine Bewegung des Wischarmadapters (10a-e) relativ zu dem Wischblattadapter (12a-e) in zumindest eine weitere Richtung einschränkt.

7. Wischervorrichtung nach Anspruch 6, **dadurch gekennzeichnet, dass** die Anschlageinheit (28a) zumindest zwei Anschlagelemente (32a, 34a) aufweist, welche an einer selben Längsseite (40a) des Wischarmadapters (10a-e) angeordnet sind.

8. Wischervorrichtung nach einem der vorhergehenden Ansprüche, **dadurch gekennzeichnet, dass** der Wischblattadapter (12a-e) einen von der Zwischeneinheit (14a; 14b; 14c; 14e) getrennt ausgebildeten Grundkörper (46a; 46c; 46e) aufweist.

9. Wischer (48a) mit zumindest einer Wischervorrichtung nach einem der vorhergehenden Ansprüche.

10. Verfahren zur Montage einer Wischervorrichtung, insbesondere nach einem der Ansprüche 1 bis 9, welche einen Wischarmadapter (10a-e) und einen Wischblattadapter (12a-e) aufweist, wobei der Wischbiattadapter (12a-e) eine Zwischeneinheit (14a; 14b; 14c; 14e) aufweist, welche zu einer lösbaren Verbindung mit dem Wischarmadapter (10a-e) vorgesehen ist, wobei der Wischarmadapter (10a-e) in zumindest einem Montageschritt mittels einer Führungseinheit (16a; 16b; 16c; 16e) des Wischblattadapters (12a-e) in eine Längsführungsrichtung (18a) geführt wird und wobei in einem montierten Zustand eine Bewegung des Wischarmadapters (10a-e) relativ zu dem Wischblattadapter (12a-e) in zumindest eine Richtung mittels einer Arretierungseinheit (20a-e) des Wischblattadapters (12a-e), welche zumindest ein Rastelement (22a, 24a; 22c; 22d, 24d; 22e) aufweist, welches in dem montierten Zustand an einer Querseite (26a; 26b; 26c) des Wischarmadapters (10a-e) anliegt, eingeschränkt wird, **dadurch gekennzeichnet, dass** der Wischarmadapter (10a; 10c; 10d; 10e) in zumindest einem Montageschritt relativ zu dem Wischblattadapter (12a; 12c; 12d; 12e) entgegen einer Radialrichtung bewegt wird.

## Claims

1. Wiper device with a wiper arm adapter (10a-e) and with a wiper blade adapter (12a-e) which has an intermediate unit (14a; 14b; 14c; 14e), which is provided for releasably connecting to the wiper arm adapter (10a-e), a guide unit (16a; 16b; 16c; 16e) which is provided for guiding the wiper arm adapter (10a-e) in a longitudinal guiding direction (18a) during mounting, and a locking unit (20a-e) which, in a mounted state, restricts a movement of the wiper arm adapter (10a-e) relative to the wiper blade adapter (12a-e) in at least one direction, wherein the locking unit (20a-e) has at least one latching element (22a, 24a; 22c; 22d, 24d; 22e) which, in the mounted state, lies against a transverse side (26a; 26b; 26c) of the wiper arm adapter (10a-e), wherein the wiper blade adapter (12a-e) has a further guide unit (42a-e) which is provided for guiding the wiper arm adapter (10a-e) in at least one further guiding direction (44a; 44b) different from the longitudinal guiding direction (18a) during the mounting, **characterized in that** the further guide unit (42a-e) is provided for guiding the wiper arm adapter (10a-e) for mounting and/or for guiding same in a rotational movement relative to the wiper blade adapter (12a-e) during mounting.

2. Wiper device according to Claim 1, **characterized in that** the locking unit (20a-e) restricts a movement of the wiper arm adapter (10a-e) relative to the wiper blade adapter (12a-e) in a direction opposite to a mounting direction (27a-e).

3. Wiper device according to Claim 1 or 2, **characterized in that** the locking unit (20a; 20b; 20d) has at least one further latching element (22a, 24a; 22d, 24d) which, in the mounted state, lies against the transverse side (26a; 26b) of the wiper arm adapter (10a-e).

4. Wiper device according to Claim 3, **characterized in that** the latching element (22a, 24a; 22d, 24d) and the further latching element (22a, 24a; 22d, 24d) are provided to be deflected in different directions during the mounting.

5. Wiper device according to one of the preceding claims, **characterized in that** the locking unit (20a-e) is arranged on the intermediate unit (14a; 14b; 14c; 14e).

6. Wiper device according to one of the preceding claims, **characterized in that** the wiper arm adapter (10a-e) has at least one stop unit (28a) which restricts a movement of the wiper arm adapter (10a-e) relative to the wiper blade adapter (12a-e) in at least one further direction.

7. Wiper device according to Claim 6, **characterized in that** the stop unit (28a) has at least two stop elements (32a, 34a) which are arranged on a same longitudinal side (40a) of the wiper arm adapter (10a-e) .

8. Wiper device according to one of the preceding claims, **characterized in that** the wiper blade adapter (12a-e) has a basic body (46a; 46c; 46e) formed separately from the intermediate unit (14a; 14b; 14c; 14e).

9. Wiper (48a) with at least one wiper device according to one of the preceding claims.

10. Method for mounting a wiper device, in particular according to one of Claims 1 to 9, which has a wiper arm adapter (10a-e) and a wiper blade adapter (12a-e), wherein the wiper blade adapter (12a-e) has an intermediate unit (14a; 14b; 14c; 14e) which is provided for releasably connecting to the wiper arm adapter (10a-e), wherein the wiper arm adapter (10a-e) is guided in at least one mounting step in a longitudinal guiding direction (18a) by means of a guide unit (16a; 16b; 16c; 16e) of the wiper blade adapter (12a-e), and wherein, in a mounted state, a movement of the wiper arm adapter (10a-e) relative to the wiper blade adapter (12a-e) is restricted in at least one direction by means of a locking unit (20a-e) of the wiper blade adapter (12a-e), said locking unit having at least one latching element (22a, 24a; 22c; 22d, 24d; 22e) which, in the mounted state, lies against a transverse side (26a; 26b; 26c) of the wiper arm adapter (10a-e), **characterized in that,** in at least one mounting step, the wiper arm adapter (10a; 10c; 10d; 10e) is moved relative to the wiper blade adapter (12a; 12c; 12d; 12e) counter to a radial direction.

## Revendications

1. Dispositif d'essuie-glace comprenant un adaptateur de bras d'essuie-glace (10a-e) et un adaptateur de balai d'essuie-glace (12a-e) qui présente une unité intermédiaire (14a ; 14b ; 14c ; 14e) qui est prévue pour être connectée de manière détachable à l'adaptateur de bras d'essuie-glace (10a-e), une unité de guidage (16a ; 16b ; 16c ; 16e), qui est prévue pour guider l'adaptateur de bras d'essuie-glace (10a-e) lors d'un montage dans une direction de guidage longitudinal (18a), et une unité de blocage (20a-e), qui, dans un état monté, limite un mouvement de l'adaptateur de bras d'essuie-glace (10a-e) par rapport à l'adaptateur de balai d'essuie-glace (12a-e) dans au moins une direction, l'unité de blocage (20a-e) présentant au moins un élément d'encliquetage (22a, 24a ; 22c ; 22d, 24d ; 22e) qui, dans l'état monté, s'applique contre un côté transversal (26a ; 26b ; 26c) de l'adaptateur de bras d'essuie-glace (10a-e), l'adaptateur de balai d'essuie-glace (12a-e) présentant une unité de guidage supplémentaire (42a-e) qui est prévue pour guider l'adaptateur de bras d'essuie-glace (10a-e) lors du montage dans au moins une direction de guidage supplémentaire (44a ; 44b) différente de la direction de guidage longitudinal (18a) **caractérisé en ce que** l'unité de guidage supplémentaire (42a-e) est prévue pour guider l'adaptateur de bras d'essuie-glace (10a-e) en vue d'un montage et/ou lors d'un montage par rapport à l'adaptateur de balai d'essuie-glace (12a-e) dans un mouvement de rotation.

2. Dispositif d'essuie-glace selon la revendication 1, **caractérisé en ce que** l'unité de blocage (20a-e) limite un mouvement de l'adaptateur de bras d'essuie-glace (10a-e) par rapport à l'adaptateur de balai d'essuie-glace (12a-e) dans une direction opposée à une direction de montage (27a-e).

3. Dispositif d'essuie-glace selon la revendication 1 ou 2, **caractérisé en ce que** l'unité de blocage (20a ; 20b ; 20d) présente au moins un élément d'encliquetage supplémentaire (22a, 24a ; 22d, 24d) qui, dans l'état monté, s'applique contre le côté transversal (26a ; 26b) de l'adaptateur de bras d'essuie-glace (10a-e).

4. Dispositif d'essuie-glace selon la revendication 3, **caractérisé en ce que** l'élément d'encliquetage (22a, 24a ; 22d, 24d) et l'élément d'encliquetage supplémentaire (22a, 24a ; 22d, 24d) sont prévus pour être déviés dans différentes positions lors du montage.

5. Dispositif d'essuie-glace selon l'une quelconque des revendications précédentes, **caractérisé en ce que** l'unité de blocage (20a-e) est disposée au niveau de l'unité intermédiaire (14a ; 14b ; 14c ; 14e) .

6. Dispositif d'essuie-glace selon l'une quelconque des revendications précédentes, **caractérisé en ce que** l'adaptateur de bras d'essuie-glace (10a-e) présente au moins une unité de butée (28a) qui limite un mouvement de l'adaptateur de bras d'essuie-glace (10a-e) par rapport à l'adaptateur de balai d'essuie-glace (12a-e) dans au moins une direction supplémentaire.

7. Dispositif d'essuie-glace selon la revendication 6, **caractérisé en ce que** l'unité de butée (28a) présente au moins deux éléments de butée (32a, 34a) qui sont disposés au niveau d'un même côté longitudinal (40a) de l'adaptateur de bras d'essuie-glace (10a-e).

8. Dispositif d'essuie-glace selon l'une quelconque des revendications précédentes, **caractérisé en ce que** l'adaptateur de balai d'essuie-glace (12a-e) présente un corps de base (46a ; 46c ; 46e) réalisé de manière séparée de l'unité intermédiaire (14a ; 14b ; 14c ; 14e).

9. Essuie-glace (48a) comprenant au moins un dispositif d'essuie-glace selon l'une quelconque des revendications précédentes.

10. Procédé de montage d'un dispositif d'essuie-glace, notamment selon l'une quelconque des revendications 1 à 9, qui présente un adaptateur de bras d'essuie-glace (10a-e) et un adaptateur de balai d'essuie-glace (12a-e), l'adaptateur de balai d'essuie-glace (12a-e) présentant une unité intermédiaire (14a ; 14b ; 14c ; 14e) qui est prévue pour être connectée de manière détachable à l'adaptateur de bras d'essuie-glace (10a-e), l'adaptateur de bras d'essuie-glace (10a-e) étant guidé, dans au moins une étape de montage, au moyen d'une unité de guidage (16a ; 16b ; 16c ; 16e) de l'adaptateur de balai d'essuie-glace (12a-e) dans une direction de guidage longitudinal (18a) et, dans un état monté, un mouvement de l'adaptateur de bras d'essuie-glace (10a-e) par rapport à l'adaptateur de balai d'essuie-glace (12a-e) dans au moins une direction étant limité au moyen d'une unité de blocage (20a-e) de l'adaptateur de balai d'essuie-glace (12a-e), qui présente au moins un élément d'encliquetage (22a, 24a ; 22c ; 22d, 24d ; 22e) qui, dans l'état monté, s'applique contre un côté transversal (26a ; 26b ; 26c) de l'adaptateur de bras d'essuie-glace (10a-e), **caractérisé en ce que** l'adaptateur de bras d'essuie-glace (10a ; 10c ; 10d ; 10e) est déplacé dans au moins une étape de montage dans le sens opposé à une direction radiale par rapport à l'adaptateur de balai d'essuie-glace (12a ; 12c ; 12d ; 12e).
